# EUROPEAN PATENT SPECIFICATION

(11) **EP 1 666 244 B1**
(45) Date of publication and mention of the grant of the patent: **29.07.2015**
(21) Application number: 04787888.9
(22) Date of filing: 10.09.2004
(51) Int. Cl.: B32B 27/20, B32B 33/00, D21H 19/38, D21H 19/50, D21H 19/66, D21H 27/18, D21H 27/26, D21H 17/51, D21H 19/58

(54) **DECORATIVE PAPER EXHIBITING BRIGHTNESS AND THERMOSETTING RESIN DECORATIVE SHEET**
HELLIGKEIT AUFWEISENDES ZIERPAPIER UND ZIERPAPIER AUS DUROPLASTISCHEM HARZ
PAPIER DECORATIF PRESENTANT UNE BRILLANCE ET FEUILLE DECORATIVE A BASE DE RESINE THERMODURCISSABLE

(30) Priority: 12.09.2003 JP 2003321029
(43) Date of publication of application: 07.06.2006
(73) Proprietor: DAI NIPPON PRINTING CO., LTD., Tokyo 162-8001 (JP)
(72) Inventor: HAMA, Kazuhiro, c/o Dai Nippon Printing Co., Ltd., Tokyo 162-8001 (JP); IIZUKA, Takashi, c/o Dai Nippon Printing Co., Ltd., Tokyo 162-8001 (JP)
(74) Representative: Beck Greener
(86) International application number: PCT/JP2004/013248
(87) International publication number: WO 2005/025861

(56) References cited:
- JP-A- 3 279 494
- JP-A- 5 209 348
- JP-A- 56 101 818
- JP-A- 58 101 129
- JP-A- 2003 246 017

## Description

### TECHNICAL FIELD

The present invention relates to a decorative paper exhibiting brightness and a thermosetting resin decorative sheet to be used for the various building material applications, such as the building interior materials for a wall and a floor, a desk, a table, furniture, or the like.

### BACKGROUND ART

A thermosetting resin decorative sheet represented by a melamine decorative sheet is produced in general by impregnating a decorative paper with a pattern printed on a paper base material with a thermosetting resin such as a melamine resin, and adding thermal pressure to the same together with an adherend such as a backing base material and an overlaying paper so as to be cured, laminated and integrated. As one of the design expression of the above-mentioned decorative sheet or decorative paper, there is a metallic design, that is, a bright design. For such a decorative paper or thermosetting resin decorative sheet having the brightness, it is known that a bright ink with a bright pigment including scaly foils of a bright substance such as aluminum powders, mica, or the like added is used for printing a pattern of the decorative paper (Refer to the Japanese Utility Model Application Publication No. 52-55514, the Japanese Patent Application Laid-Open (JP-A) Nos. 53-56268, 54-96579, 2000-86625, or the like).

JP58101129 discloses a composition for use in producing decorative paper, said composition comprising a coating pigment bearing thermosetting resin paint.

JP56101818 discloses the use of urethane resins in the manufacture of decorative paper.

Moreover, a decorative paper exhibiting brightness with a bright ink layer formed on a paper base material with a bright ink containing a bright pigment of the scaly foil shape may generate the surface irregularity with the bright feeling of the bright ink irregular and uneven in the plane, at the time of impregnation process of the decorative paper with such as a melamine resin, or at the time of thermal pressure molding to provide a thermosetting resin decorative sheet thereafter. Consequently, the design property is deteriorated. In order to improve the surface irregularity, a decorative paper with a transparent ink layer for covering and protecting the bright ink layer coated and formed on the bright ink layer has been proposed (Refer to the JP-A No. 54-96579).

As mentioned above, attention should be paid to the surface irregularity to obtain the bright design for the thermosetting resin decorative sheet. Moreover, the solution measure of covering the bright ink layer by providing a transparent ink layer at the uppermost surface proposed by JP-A No. 54-96579 as the improvement measure involves a further problem of requiring the additional transparent ink layer. Furthermore, if the transparent ink layer is added, the impregnation property of the resin liquid such as a melamine resin is lowered so that the air remaining in the fibers of the paper base material after the resin liquid impregnation is expanded at the heating the thermosetting resin decorative sheet. Consequently, another problem arises in that the so-called blisters can easily be generated (deterioration of the heat resistance blister property).

### DISCLOSURE OF THE INVENTION

### Problem to be solved by the invention

An object of the present invention is to prevent generation of the surface irregularity of the brightness (bright feeling) at the resin impregnation or the thermal pressure molding, without providing an additional transparent ink layer on the decorative paper surface or deteriorating the heat resistance blister property, in the case the brightness is provided as a design of a thermosetting resin decorative sheet or a decorative paper therefor.

### Means for solving the problem

In order to solve the above-mentioned problems, the present invention now provides a decorative paper exhibiting brightness, said decorative paper comprising a bright ink layer as an uppermost layer on a paper base material,

wherein the bright ink layer is produced from a resin ink containing:
(a) a bright pigment including a scaly foil of a bright substance, and
(b) a resin component comprising a urethane resin emulsion and acrylic resin and a casein resin.

Such configuration prevents the bright ink layer from dissolving or swelling with the water content contained in the impregnation resin solution. In consequence, movement of the bright pigment dispersed and held in the bright ink layer at the time of the impregnation process with the water based impregnation resin solution of a melamine resin, or the like, can be restrained, and it is even when the bright ink layer is provided as the uppermost layer and the water based resin such as a casein resin and an acrylic resin is used for the resin of the ink for the bright ink layer. This is because fixation of the bright pigment can be made firmer owing to the addition of the urethane resin emulsion. As a result, generation of the surface irregularity of the brightness can be improved. Moreover, at the time of producing a thermosetting resin decorative sheet by the thermal pressure molding thereafter, movement of the bright pigment by the flow of the impregnation resin can be restrained. As a result, generation of the surface irregularity of the brightness can be improved.

Moreover, a thermosetting resin decorative sheet exhibiting brightness of the present invention includes a layer produced by impregnating the above-mentioned decorative paper exhibiting brightness with a thermosetting resin and curing.

Such configuration also allows the thermosetting resin decorative sheet to enjoy the effect of the above-mentioned decorative paper exhibiting brightness. That is, also for a decorative sheet using a decorative paper exhibiting brightness with a bright ink layer provided on the uppermost layer using a water based resin such as a casein resin and an acrylic resin for the resin of the ink of the bright ink layer, fixation of the bright pigment can be made firmer by the addition of the urethane resin emulsion so as to restrain the movement. As a result, generation of the surface irregularity of the brightness, at the time of impregnating a decorative paper with a resin or producing a thermosetting resin decorative sheet by the thermal pressure molding, can be improved.

### Effect of the invention

(1) According to a decorative paper exhibiting brightness of the present invention, generation of the surface irregularity of the brightness at the time of impregnation with the impregnation resin can be improved. Moreover, also at the time of producing a thermosetting resin decorative sheet by the thermal pressure molding thereafter, generation of the surface irregularity of the brightness can be improved. Furthermore, addition of the transparent ink layer, which deteriorates the heat resistance blister property, is not needed.
(2) Moreover, according to a thermosetting resin decorative paper exhibiting brightness of the present invention, generation of the surface irregularity of the brightness at the time of impregnating the decorative paper with a resin and thermal pressure molding can be improved.

### BEST MODE FOR CARRYING OUT THE INVENTION

Hereinafter, embodiments of the present invention will be explained with reference to the drawings.

### § 1. Summary

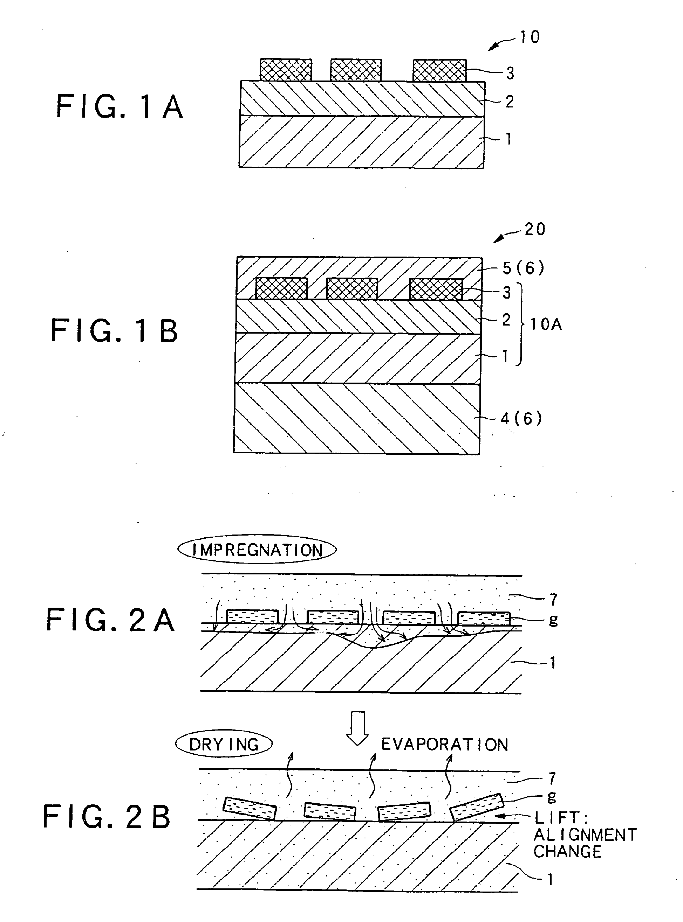

First, FIGS. 1A to 1B are cross-sectional views each showing one embodiment of a decorative paper exhibiting brightness of the present invention (FIG. 1A) and a thermosetting resin decorative sheet exhibiting brightness of the present invention (FIG. 1B) . Moreover, FIGS. 2A to 2B is a cross-sectional view for conceptually explaining the mechanism of the surface irregularity generation.

The decorative paper exhibiting brightness 10 shown in FIG. 1A is a decorative paper having a configuration with a pattern ink layer 2 (of an ordinary ink contains no bright pigment) and a bright ink layer 3 containing a bright pigment including a scaly foil of a bright substance) formed in this order by printing, or the like on a paper base material 1. In this embodiment, the bright ink layer 3 is formed as the uppermost layer with no another layer formed on the layer, and an urethane resin emulsion is used in combination with a water based resin such as a casein resin and an acrylic resin for the resin of the ink of the bright ink layer. Although the pattern ink layer 2 under the bright ink layer 3 may be omitted depending on the design, it is in general provided for providing a better design.

Such a decorative paper exhibiting brightness 10 can be used preferably for a known thermosetting resin decorative sheet represented by a melamine decorative paper so that generation of the surface irregularity of the brightness on the resin impregnation or the thermal pressure molding at the time of producing the decorative sheet can be improved. Then, a thermosetting resin decorative sheet exhibiting brightness 20, as shown for example in FIG. 1B, can be obtained.

That is, the thermosetting resin decorative sheet exhibiting brightness 20, a cross-sectional view of its embodiment is shown in FIG. 1B, is a decorative sheet having the following configuration: a decorative paper exhibiting brightness 10A, prepared by impregnating the above-mentioned decorative paper exhibiting brightness 10 with a thermosetting resin and curing, has a backing base material 4 provided on its rear side and an overlaying paper 5 provided on its front side so as to be laminated and integrated such that it is sandwiched on the front and rear sides by adherend 6 comprising the backing base material 4 and the overlaying paper 5.

### § 2. Decorative paper exhibiting brightness

Next, the decorative paper exhibiting brightness of the present invention will be explained. The decorative paper exhibiting brightness of the present invention is characterized by the resin composition and the layer positional relationship of the bright ink layer on the paper base material. As to the other configurations, the configurations of the various decorative papers conventionally known and used of the so-called thermosetting resin decorative sheets can be adopted optionally according to the application.

### [Paper base material]

For example, as the paper base material 1, a titanium paper containing a titanium white is used typically, however, other papers can be used as well. Examples thereof include a craft paper, a high-quality paper, or a Japanese paper. Moreover, the fibers of the paper base material are in general a cellulose fiber. Additionally, a mixed paper using a resin fiber, a glass fiber, or the like in combination may be used as well. Moreover, a resin impregnation paper with the papers impregnated with a resin, or the like can be used. The grammage of the paper base material is about 50 to 120 g/m².

### [Pattern ink layer]

The pattern ink layer 2 can be formed using a known ink by a known forming method such as gravure printing, of fset printing, flexo printing, ink jet printing, or the like. The pattern ink layer 2 in the present invention is a layer substantially not containing a bright pigment including the scaly foil of the bright substance like the bright ink layer 3, and it is a layer expressing a pattern with an ordinary ink. In the case of using a water based ink for the pattern ink layer in consideration to the environment or other factors, a water based resin such as a casein resin and an acrylic resin may be used for the ink as in the bright ink layer. In this case, an urethane resin emulsion may further be used.

### [Bright ink layer]

The bright ink layer 3 can be formed by a known forming method such as gravure printing, as in the pattern ink layer, except that an ink peculiar to the present invention is used. The pattern of the bright ink layer and the above-mentioned pattern ink layer can be selected optionally including an entire solid in accordance with the application. Then, in this invention, for the ink of the bright ink layer, an ink using an urethane resin emulsion in combination with a water based resin such as a casein resin and an acrylic resin as the resin for its binder is used. Although the casein resin and the acrylic resin are the representative resins of the ink for a decorative paper for a melamine resin, those conventionally known as the water based ink, the water based paint, or the like can be adopted optionally as the casein resin, the acrylic resin, and the urethane resin emulsion. By using such a water based ink, advantages of having an environment-conscious bright ink layer, or the like can be obtained. As the casein resin, there are those of water soluble type, milk protein based, plant based, modified products thereof, or the like. As the acrylic resin, there are those used in a form of an emulsion, of ester based of an acrylic acid or a methacrylic acid, or the like. As the urethane resin emulsion, for example, an emulsion of a carboxyl group containing polyurethane resin, or the like can be cited.

The amount of combining the urethane resin emulsion can be adjusted optionally. For example, if the combining amount of the urethane resin emulsion is too large, a trouble of generating of repellency after drying the impregnation resin (a phenomenon that wetting of the water based resin solution such as a melamine resin to be impregnated becomes poor so as to be repelled. This is because the bright ink layer after drying becomes more hydrophobic (than the circumference)), can be caused. Therefore, in the case of using a casein resin and an acrylic resin for the water based resin, it is preferable to use in a range with respect to these water based resins of (water based resin)/(urethane resin emulsion (resin solid component)) = 8.5/1.5 to1.5/8.5. If the urethane resin emulsion is too little, the effect of improving the surface irregularity of the brightness cannot be obtained sufficiently.

On the other hand, as the bright pigment for the bright ink layer, a pigment of a bright substance of a scaly foil shape is used in the present invention. As such a bright pigment, typical example is a scaly foil of an aluminum. Additionally, as the bright pigment, for example, scaly foils of a metal material such as copper powders and brass powders can be presented. With the scaly foils of these metal materials, a metal glossy feeling can be obtained as the brightness. Moreover, the "brightness" in the present invention also includes the so-called pearl glossy feeling (pearly glossy feeling). The pearl glossy feeling can also be obtained by the bright pigment including the scaly foil of the bright substance. As the bright pigment providing such a pearl glossy feeling, for example, a bright pigment including foils of a titanium dioxide covered mica, a bismuth acid chloride, or a bright pigment including scaly foils produced by cutting a film prepared by laminating a number of the resin layers of two or more kinds with different refractive indexes by several µm or less so as to generate an interference color (bright substance) can be presented. The size of the bright pigment can be adjusted optionally according to the design. The range of the particle size (the radius of the circumscribing sphere or the diagonal line length) is about 1 to 100 µm, in particular, about 5 to 30 µm. Moreover, the addition amount of the bright pigment can also be adjusted according to the design. It is in general about 50 to 200 % by mass to the resin.

As the solvent for the ink for forming the bright ink layer, in general, in addition to water, a water soluble organic solvent such as alcohols including an isopropyl alcohol, cellosolves including an ethylene glycol monomethyl ether can be used in combination.

Using the above-mentioned inks in forming the bright ink layer enables to improve the generation of the surface irregularity of the brightness. The conceivable following reason will be explained with reference to the cross-sectional view for conceptually explaining the mechanism of the surface irregularity generation of FIGS. 2A to 2B.

First, FIG. 2A is a cross-sectional view showing conceptually the behavior of a resin solution 7 at the time of impregnation with a thermosetting resin such as a melamine resin. The resin solution 7 permeates into the inside of the paper base material 1 from the gap of the bright pigment g on the paper base material 1. The bright pigment g of a scaly foil shape is in a state aligned parallel to or substantially parallel (horizontal in the figure) to the surface of the paper base material 1 in the process of transferring and drying the ink at the time of forming the bright ink layer (the alignment provides the efficient light reflection with respect to the incident light beam so as to provide the excellent brightness). Although the bright pigment g is inherently dispersed and held in the bright ink layer, in conceptual FIGS. 2A to 2B, for the effect of stressing, the bright ink layer is omitted so that only the bright pigment g is shown on the paper base material.

FIG. 2B conceptually shows the state at the time of drying in a drying hood, after impregnating the resin solution 7. This time, the volatile component such as the water content in the resin solution 7 evaporates from the paper base material 1 or the like between the bright pigments g to the outside. At the time, since the bright pigment g is fixed by the water based binder resin, it is loosened by the water based volatile component such as the water content or the heat at the time of drying. As a result, the pigment g is moved by the moving force of the volatile component to be moved from the lower side to the upper side of the bright pigment g into a lifted state to change the alignment. Consequently, the light reflection is lowered so that the surface irregularity of the brightness is considered to be generated.

On the other hand, by using in combination an urethane resin emulsion for the resin to fix the bright pigment g as in the present invention, resistance is provided to the fixation of the bright pigment with respect to the water based volatile component such as water. As a result, the alignment change at the time of drying can be restrained so that generation of the surface irregularity is considered to be improved.

### [Other layers]

The decorative paper exhibiting brightness of the present invention may optionally have a layer other than the above-mentioned within a scope not departing from the gist of the present invention. For example, a primer layer, a sealer layer, or the like provided between the paper base material and the bright ink layer, or between the paper base material and the pattern ink layer can be presented.

### § 3. Thermosetting resin decorative sheet exhibiting brightness

Next, the thermosetting resin decorative sheet exhibiting brightness of the present invention will be explained. The thermosetting resin decorative sheet exhibiting brightness of the present invention is characterized by the configuration using the decorative paper exhibiting brightness as mentioned above. For the other configurations, various configurations of the so-called thermosetting resin decorative sheets can be adopted optionally according to the application. For example, as the adherend, a backing base material, an overlaying paper, or the like is common as shown in the thermosetting resin decorative sheet 20 of FIG. 1B.

### [Thermal pressure molding]

The thermosetting resin decorative sheet is produced by thermal pressure molding of curing the impregnation resin while applying heat and pressure to the impregnated decorative paper laminated with the other adherend, after producing an impregnated decorative paper by impregnating the above-mentioned decorative paper with a resin solution of a melamine resin, or the like.

The thermosetting resin for the resin solution for impregnating the decorative paper prior to the thermal pressure molding may be a known resin according to the application. For example, a typical example is a melamine resin. Additionally, a guanamine resin, a phenol resin, an unsaturated polyester resin, and a diallyl phthalate (DAP) resin can be presented. In the present invention, in the case the resin solution for impregnating the decorative paper is, in particular, water based such as in the case of the melamine resin, generation of the surface irregularity of the brightness generated at the time of the resin impregnation can be improved. This is probably owing to the resistance of fixation of the bright pigment in the bright ink layer of the decorative paper in particular with respect to water.

For the thermal pressure molding, the thermal pressure molding process in the various kinds of thermosetting resin decorative sheets such as a melamine decorative sheet can be adopted optionally. In the case of using an (uncured) adherend to be impregnated with the resin such as the backing base material and the overlaying paper, it is in general cured simultaneously at the time of the thermal pressure molding.

Moreover, in the present invention, since fixation of the bright pigment in the decorative paper is improved, the alignment change of the bright pigment can be restrained also with respect to the flow of the impregnation resin at the time of the thermal pressure molding. As a result, generation of the surface irregularity of the brightness at the time of the thermal pressure molding can be improved.

### [Adherend: the backing base material and the overlaying paper]

As the adherend 6, the backing base material 4, the overlaying paper 5, or the like can be provided (see FIG. 1B). The backing base material 4 is a base material to be laminated, bonded and integrated with the rear side of the decorative paper for providing desired shape, thickness, dynamic strength, or the like to the thermosetting resin decorative sheet. As a typical example of the backing base material, a core paper prepared by impregnating a paper with an uncured thermosetting resin (typically, a phenol resin, the impregnation resins for the above-mentioned decorative paper, or the like) can be cited. Moreover, a woody base material, an inorganic base material, a metal base material, or the like can be used as the backing base material to the lower side of the core paper in the case of using the core paper, or to the lower side of the decorative paper in the case of not using the core paper. As the woody base material, there are a single sheet, a plywood, a particle board, a fiber board, a laminated wood, or the like. As the metal base material, for example, there are metal sheets of an iron, an aluminum, or the like.

Moreover, the thermosetting resin for impregnation (in the case of impregnating the backing base material with the resin) can be selected optionally from the thermosetting resins listed for the above-mentioned impregnated decorative paper. As the overlaying paper 5, those conventionally known commonly and used for the thermosetting resin decorative sheets can be used. Typically, a melamine paper resin impregnated paper with a transparent paper impregnated with a melamine resin can be used. As the impregnation resin for the overlaying paper 5, the impregnation resins for the above-mentioned decorative paper, or the like can be presented.

### [Other layers]

The thermosetting resin decorative sheet exhibiting brightness of the present invention may be a laminated product, wherein the laminated member with the adherend and the decorative paper as mentioned above laminated and integrated is further laminated with another base material (for example, a woody base material, an inorganic base material, a metal base material, a resin base material, or the like) via a known adhesive layer, or the like.

### [Applications]

The applications of the thermosetting resin decorative sheet (or consequently the applications of the decorative paper) are not particularly limited. For example, they are the top board or the sideboard of a desk, a table, furniture, or the like, fittings for a door or the like, building interior materials such as a wall and a floor, interior materials for various kinds of vehicles such as an automobile, a train and a ship, and electric appliance cabinets for a television or the like.

### Example 1

A decorative paper exhibiting brightness 10 and a thermosetting resin decorative sheet exhibiting brightness 20 as shown in the cross-sectional views of FIGS. 1A and B were produced. First, by forming a pattern ink layer 2 of a white solid pattern with a coloring agent titanium white and a bright ink layer 3 of an abstract graphic pattern on the layer 2 by gravure printing on a 80 g/m² grammage titanium paper containing 20% by mass of a titanium oxide, a decorative paper 10 having a desired brightness was produced. For the resin of the ink of the pattern ink layer 2, a casein resin and an acrylic resin emulsion was used.

Moreover, for the ink resin of the bright ink layer 3, a casein resin, a (water based) acrylic resin, and an urethane resin emulsion were used in combination. As the ink of the bright ink, one prepared by mixing an ink A which comprises a casein resin and an acrylic resin emulsion with no urethane resin emulsion (casein resin : acrylic resin = 12:0.8 mass ratio) and an ink B which comprises only an urethane resin emulsion, adjusted to a A:B = 7:3 mass ratio was used. In the ink A and the ink B, as the bright pigment, a composition containing 115 parts by mass of scaly foils of an aluminum (average particle size 11 µm) with respect to 100 parts by weight of the resin component, with a volatile component (a solvent mixture of water and an isopropyl alcohol by 1:1 mass ratio) 65% by mass was used, respectively. The ink content of the examples and the comparative examples are shown in the table 1 together with the results.

Then, by impregnating the above-mentioned decorative paper 10 with a melamine resin solution including water and drying, an impregnated decorative paper was produced. The surface irregularity of the brightness was not generated at the time of resin impregnation and drying.

Next, with the above-mentioned impregnated decorative paper placed on four pieces of core papers 4 impregnated with a phenol resin as the backing base material 4 (adherend 6), and furthermore, with an overlaying paper 5 comprising a transparent paper impregnated with a melamine resin placed thereon, thermal pressing molding was carried out so as to produce a desired thermosetting resin decorative sheet exhibiting brightness 20 as shown in FIG. 1B. The surface irregularity of the brightness was not generated after the thermal pressing.

### Example 2

A decorative paper and a thermosetting resin decorative sheet each exhibiting brightness were produced in the same manner as in the example 1 except that the mixing ratio of the ink A and the ink B including an urethane resin emulsion of the example 1 was changed to A:B = 9:1 mass ratio.

### Example 3

A decorative paper and a thermosetting resin decorative sheet each exhibiting brightness were produced in the same manner as in the example 1 except that the mixing ratio of the ink A and the ink B including an urethane resin emulsion of the example 1 was changed to A:B = 8:2 mass ratio.

### Example 4

A decorative paper and a thermosetting resin decorative sheet each exhibiting brightness were produced in the same manner as in the example 1 except that the mixing ratio of the ink A and the ink B including an urethane resin emulsion of the example 1 was changed to A:B = 5:5 mass ratio.

### Comparative Example 1

A decorative paper and a thermosetting resin decorative sheet each exhibiting brightness were produced in the same manner as in the example 1 except that the mixing ratio of the ink A and the ink B including an urethane resin emulsion of the example 1 was changed to A:B = 10:0 mass ratio(only ink A).

### Comparative Example 2

A decorative paper and a thermosetting resin decorative sheet each exhibiting brightness were produced in the same manner as in the example 1 except that the mixing ratio of the ink A and the ink B including an urethane resin emulsion of the example 1 was changed to A:B = 0:10 mass ratio(only ink B).

**[Table 1]**

| Table 1 Performance evaluation results | | | | | |
|---|---|---|---|---|---|
| | Mixing ratio of the urethane resin emulsion (ink B) | | Surface irregularity of the brightness | | Others (repelling after impregnation and drying) |
| | Ink A | InkB | On impregnation | On thermal pressure molding | |
| Comparative example 1 | 10 | 0 | Generated | Generated | ○ ~ Δ |
| Example 2 | 9 | 1 | Not generated | Not generated | ○ ~ Δ |
| Example 3 | 8 | 2 | Not generated | Not generated | ○ ~ Δ |
| Example 1 | 7 | 3 | Not generated | Not generated | ○ ~ Δ |
| Example 4 | 5 | 5 | Not generated | Not generated | ○ ~ Δ |
| Comparative example 2 | 0 | 10 | Generated | Generated | Δ |

| | | | | | |
|---|---|---|---|---|---|
| ○: no repelling and preferable Δ: slightly repelling | | | | | |

As shown in the table 1, according to each example, the surface irregularity of the brightness was not generated at the time of impregnation or thermal pressure molding. However, according to each comparative example, the surface irregularity of brightness was generated both at the time of impregnation and thermal pressure molding. Moreover, in the comparative example 2 having only the urethane resin emulsion as the ink resin, repelling was often observed after impregnation with the resin and drying.

### BRIEF DESCRIPTION OF THE DRAWINGS

FIGS. 1A to 1B are cross-sectional views each showing an example of one embodiment for a decorative paper exhibiting brightness (FIG. 1A) and a thermosetting resin decorative sheet exhibiting brightness (FIG. 1B) according to the present invention.
FIGS. 2A to 2B is a cross-sectional view for explaining conceptually the mechanism of the surface irregularity generation.

### EXPLANATION OF REFERENCES

- 1: paper base material
- 2: pattern ink layer
- 3: bright ink layer
- 4: backing base material
- 5: overlaying paper
- 6: adherend
- 7: resin solution
- 10: decorative paper exhibiting brightness
- 10A: decorative paper exhibiting brightness (resin impregnated and cured)
- 20: thermosetting resin decorative sheet exhibiting brightness
- g: bright pigment

## Claims

1. A decorative paper exhibiting brightness, said decorative paper comprising a bright ink layer as an uppermost layer on a paper base material,
wherein the bright ink layer is produced from a resin ink containing:
(a) a bright pigment including a scaly foil of a bright substance, and
(b) a resin component comprising a urethane resin emulsion and acrylic resin and a casein resin.

2. A thermosetting resin decorative sheet exhibiting brightness including a layer produced by impregnating the decorative paper exhibiting brightness according to claim 1 with a thermosetting resin and curing.

3. A thermosetting resin decorative sheet as claimed in claim 2, wherein the thermosetting resin is a melamine resin.

## Patentansprüche

1. Dekoratives, Glanz aufweisendes Papier, das dekorative Papier enthält eine glänzende Farbschicht als oberste Schicht auf einem Papiergrundmaterial,
wobei die glänzende Farbschicht aus einer Harzfarbe hergestellt wird, die Folgendes enthält:
(a) ein glänzendes Pigment, das eine strukturierte Folie aus einer glänzenden Substanz umfasst, sowie
(b) eine Harzkomponente, die eine Urethanharzemulsion und Akrylharz und ein Kaseinharz umfasst.

2. Wärmehärtbarer, Glanz aufweisender Harz-Dekorbelag, der eine Schicht enthält, die hergestellt wird, indem das dekorative, Glanz aufweisende Papier nach Anspruch 1 mit einem wärmehärtbaren Harz und Härter imprägniert wird.

3. Ein wie in Anspruch 2 beanspruchter wärmehärtbarer Harz-Dekorbelag, wobei das wärmehärtbare Harz ein Melaminharz ist.

## Revendications

1. Un papier décoratif d'aspect lumineux, ce papier décoratif comprenant une couche d'encre brillante, qui en est la couche supérieure, placée sur une matière de base en papier,
la couche d'encre brillante étant produite avec une encre de résine contenant :
(a) un pigment brillant comprenant une feuille écailleuse d'une substance brillante, et
(b) un composant à résine comprenant une émulsion de résine d'uréthane, ainsi qu'une résine acrylique et une résine de caséine.

2. Une feuille décorative à résine thermodurcissable d'aspect lumineux, comprenant une couche produite par imprégnation du papier décoratif d'aspect lumineux selon la revendication 1 avec une résine thermodurcissable, et durcissement.

3. Une feuille décorative à résine thermodurcissable selon la revendication 2, dans laquelle la résine thermodurcissable est une résine de mélamine.
